(19) Europäisches Patentamt
European Patent Office
Office européen des brevets

(11) **EP 2 861 964 B1**

(12) **EUROPEAN PATENT SPECIFICATION**

(45) Date of publication and mention of the grant of the patent:
**11.04.2018 Bulletin 2018/15**

(21) Application number: **13709972.7**

(22) Date of filing: **06.02.2013**

(51) Int Cl.:
**G01N 21/35** (2014.01)

(86) International application number:
**PCT/GB2013/050269**

(87) International publication number:
**WO 2013/117920 (15.08.2013 Gazette 2013/33)**

(54) **MULTIFREQUENCY IMAGING METHOD AND APPARATUS**

MULTIFREQUENZBILDGEBUNGSVERFAHREN UND -VORRICHTUNG

PROCÉDÉ ET APPAREIL D'IMAGERIE MULTIFRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2012 GB 201201996**

(43) Date of publication of application:
**22.04.2015 Bulletin 2015/17**

(73) Proprietor: **Digital Barriers Services Limited London SE1 9PG (GB)**

(72) Inventors:
- **MANN, Christopher Mark**
  **St. Mawgan**
  **Cornwall TR8 4ET (GB)**
- **SEYMOUR, Carl**
  **Didcot**
  **Oxfordshire OX11 8TB (GB)**
- **TALBOT, Paul Ian**
  **Witney**
  **Oxfordshire OX28 3QY (GB)**
- **MARSH, Stephen Paul**
  **Northampton**
  **Northamptonshire NN5 6JW (GB)**
- **SLACK, Richard Ian**
  **Hemel Hempstead**
  **Hertfordshire HP2 6AS (GB)**

(74) Representative: **Faulkner, Thomas John et al Cleveland**
**10 Fetter Lane**
**London EC4A 1BR (GB)**

(56) References cited:
**WO-A1-00/75641        WO-A1-2009/007095
WO-A2-2004/038854    US-A1- 2005 110 672**

- **APPLEBY R ET AL: "Standoff Detection of Weapons and Contraband in the 100 GHz to 1 THz Region", IEEE TRANSACTIONS ON ANTENNAS AND PROPAGATION, IEEE SERVICE CENTER, PISCATAWAY, NJ, US, vol. 55, no. 11, 1 November 2007 (2007-11-01), pages 2944-2956, XP011196874, ISSN: 0018-926X, DOI: 10.1109/TAP.2007.908543 cited in the application**

**Description**

The present invention relates to a multifrequency imaging method and apparatus using the electromagnetic spectrum at wavelengths in the centimetre to sub-millimetre range.

Embodiments of the invention have particular relevance in the terahertz region of the electromagnetic spectrum. The terahertz region has particular benefit for many applications, offering high resolution in small systems. "Terahertz" in this context means the electromagnetic spectrum at wavelengths in the millimetre to sub-millimetre range.

Terahertz radiation has been found a useful tool for imaging and other purposes because some materials are transparent to it which are opaque through the visible spectrum. This allows these materials to be "seen through" using terahertz radiation where they could not using visible optical radiation. Further, objects themselves emit terahertz radiation, including the human body. Because clothing is generally transparent to terahertz radiation but many objects are not, including for example weaponry, another application has been the detection of objects otherwise concealed about the person.

US patent application 2008/0251733 assigned to Qinetic Limited discloses a non-imaging technique using radiation at two distinct wavebands, these showing respectively high and low atmospheric absorbency, for detecting the presence of materials of interest such as metallic objects which tend to reflect the coldness of the sky.

It is possible to use either active or passive terahertz imaging. In active imaging, a terahertz source can be used to illuminate an object or field of view. In passive imaging, there is no illuminating source, the terahertz detection regime just receiving terahertz radiation from an object or field of view. Passive imaging systems have an advantage in some applications, such as imaging humans, because there can be no inference that use of the system can cause physical harm. However, the signal to noise ratio is relatively low with passive imaging, so that the speed with which an image can be built tends to be limited in comparison with active imaging systems.

Various factors will influence the image produced, particularly where the image involves a living creature carrying a concealed object. It is often the case that detection of a concealed object is dependent for example on differences in reflectivity or temperature of the object compared with neighbouring materials. Those factors are not always predictable or controllable. Relevant factors are:

- *Thermalisation* - When worn under clothing for extended periods an object warms towards body temperature, making it more difficult to see
- *Glint* - In a bright outdoor environment, sky glint can create an apparent shape like a concealed object
- *Resolution* - The ability to distinguish the shape and effective temperature of an object will be affected by the resolution of the detector and distance from the field of interest
- *Penetration* - The ability to see through clothing is affected by its density and thickness

According to a first aspect of the present invention, there is provided apparatus for providing image data with respect to a field of view, the apparatus comprising at least two terahertz receivers adapted to receive radiation from a common area of the field of view at different respective frequencies over the same period of time, an image processor for providing image data with respect to the field of view at each respective frequency, and a composite image generator for generating composite image data with respect to the common area from at least part of the image data provided by the image processor, the composite image data comprising image data at two or more of said different respective frequencies, characterized in that each of the two terahertz receivers comprises a respective mixer that makes use of a common local oscillator source and the respective mixers are configured to provide down-conversion of the different respective frequencies at mixer frequencies that are harmonically related to the frequency of the common local oscillator source.

Image data in this context comprises data that can be used in constructing a two- dimensional (or greater) image of at least part of a field of view. Such image data can be used for example in shape analysis.

By using two or more different frequencies, it is possible to create image data which characterises surfaces in the field of view. This is because surfaces can behave differently at different frequencies and the combination of behaviours is characteristic of the surface, not of the frequencies used. For example, skin is predominantly reflective at lower frequencies and predominantly emissive at higher frequencies. It can therefore appear differently in images collected at different frequencies. At lower frequencies, it can reflect radiation present in its environment and therefore appear to be at the temperature of the reflected radiation whereas at higher frequencies skin appears at body temperature. Metal on the other hand will reflect more of the radiation present in the environment at both low and high frequencies. This difference in behaviour allows skin to be distinguished from non-skin even when the two surfaces are at the same physical temperature due to thermalisation because their effective temperature (the result of a combination of emitted, transmitted and reflected radiation) is different at different frequencies.

Thus the different frequencies might comprise at least one frequency at which skin is predominantly reflective and at least one frequency at which skin is predominantly emissive, these being for example up to 150 GHz and not less than 275 GHz. In practice, these boundaries might be selected to be further apart, such as up to 100GHz and/or not less than 300GHz.

Such a choice of frequencies offers more than the ability to distinguish skin from other materials: it can also avoid a problem known as sky glint which occurs particularly with passive imaging systems. It is desirable to use longer THz wavelengths in order to improve penetration through clothing for detection of concealed objects but skin is increasingly reflective at longer wavelengths. In an outdoor environment, the sky is usually a cool source of radiation and at the longer wavelengths skin can reflect it. This produces shapes in an image which are dictated by the slant of the skin to the sky and are variable according to body shape. For example the shoulders and chest will often produce an apparently cold shape in an image. Such cold areas can look like concealed objects or offer camouflage for concealed objects. Using an embodiment of the invention, the combined image data of step iii) above can contain information about concealed objects while also distinguishing skin from non-skin materials.

A further advantage of using a combination of frequencies is to overcome the problem of thermalisation. Where a concealed object has been present against, or close to, the skin for a sufficient time, it will warm to the same physical temperature as the skin and thus be undetectable by means of emissive radiation alone. Because the transition of skin from reflective to emissive takes place over a characteristic frequency range, other materials that do not possess the same characteristic transition from emissive to reflective and/or possess different transmission characteristics will not show the same effective temperature at all observed frequencies and will therefore always be distinguishable from skin, even though they are at the same physical temperature.

In more detail, it is important to understand that the temperature that a THz/ centimetre/submillimetre wave camera measures for any particular part of a scene is not the physical temperature (i.e., the surface temperature a thermometer would measure) but an effective temperature that is dependent on the emissivitiy, reflectivity and transmissivity of the material;. These parameters are defined below in equation 1:

$$\varepsilon + \rho + t = 1 \quad \dots\dots\dots\dots\dots\dots\dots\dots\dots\text{Equation 1}$$

where $\varepsilon$ is the emissivity of the material at the cameras frequencies, $\rho$ is the reflectivity of the material at the cameras frequency and t is the transmissivity of the material at the cameras frequency.

The effective temperature $T_{eff}$ that the camera "sees" equates to that shown in equation 2:

$$T_{phy} \times \varepsilon + T_{env} \times \rho + T_{back} \times t = T_{eff} \quad \dots\dots\dots\text{Equation 2}$$

where $T_{phy}$ is the physical temperature of the material's surface, $T_{env}$ is the effective temperature of the environment surrounding the material and $T_{back}$ is the temperature of the background behind the material.

A good technical paper that describes this in more detail is "Standoff Detection of Weapons and Contraband in the 100 GHz to 1 THz Region" by Roger Appleby and H Bruce Wallace, published in IEEE Transactions on Antennas and Propagation, Vol. 55, No. 11, November 2007 at pages 2944-2956. At THz frequencies, most materials more than a few millimetres thick are considered optically thick which means that the influence of the transmissivity factor is very small. Therefore the effective temperature is usually dominated by the emissivity and reflectivity.

If we are to consider the case where an object has fully thermalised and so for a single frequency effectively disappeared then in order for this to happen for a multifrequency camera, the material, 'material X' would need to possess the same effective temperature over a range of frequencies say $f_a$, $f_b$, $f_c$, $f_d$, (selected to be sufficiently spread over the THz region for a transition with skin to occur). For the material to be indistinguishable from skin when it is at the same physical temperature, by definition (ignoring tranmissivity), $\varepsilon_{sk} = \varepsilon_X$, and $\rho_{sk} = \rho_X$ at all frequencies $f_a$, $f_b$, $f_c$, and $f_d$. In reality, this situation very rarely occurs and so there will always be one or more frequencies where a different effective temperature is observed.

The combined image data might be combined over the whole of the field of view or only over one or more selected areas of the field of view.

In order to build an image quickly, as will often be desirable in security situations for example, or where changes in environmental conditions might affect the result, it can be important that the terahertz radiation from the common area of the field of view is received at different frequencies simultaneously so that nothing changes in the common area of the field of view for the purpose of the imaging. (The word "simultaneously" as used herein is intended to have this meaning; sufficiently close in time that nothing changes in the common area of the field of view for the purpose of the imaging.) This will usually necessitate the use of at least two terahertz receivers adapted to receive radiation at different respective frequencies so that it can be done simultaneously. "Adapted to receive" means in practice adapted to respond to the radiation at different respective frequencies so as to give an informative output. Where the receivers are mixer-based, such adaptation might include either of:

- scaling the receiving feedhorns to give the same coupling factor in relation to receiving waveguides
- employing a mixer and intermediate frequency (IF) amplifier combination having an appropriate effective bandwidth for the local oscillator frequency

In an alternative arrangement, one terahertz receiver might be used and its output frequency-divided to support the generation of image data at more than one received frequency. Although this can be done at radio frequencies, in a mixer-based receiver it can be done at IF frequencies, for example by using a frequency divider such as a diplexer at the IF output of the receiver.

The image processor and the composite image generator are not necessarily separate physical items but might be provided within the same overall image processing equipment, for example as processes capable of being run independently but contributing to a common set of composite image data.

The composite image generator might be adapted to colour code image data generated at the different frequencies so that combined image data contains combined colour coding from the image data generated at different frequencies. This combined colour coding can be used to characterise surfaces. For example, reflective metal will appear to be at the temperature of the environment at both low and high frequencies whereas skin will only appear to be at the temperature of the environment at lower frequencies. At higher frequencies it will appear to be at body temperature. The combined colour coding from the different frequencies is likely thus to show skin as a different colour from metal. Further, the combined colour coding might produce a colour not present in the colour coding for any one frequency alone, making any one surface type particularly distinctive.

It is known in general to assign specified colours to pixels in images to identify areas having specified characteristics but, in embodiments of the invention, it is useful to use a known form of colour map so that pixel colours in a composite image are created from the colour map. If the image processor is adapted to generate grey scale image data for each of a set of frequencies, in use, then the composite image generator might assign a respective colour of a colour map to each of the frequencies and combine the so-coloured grey scale image data over at least the common area of the image to produce composite image data. Known colour maps are often based on for example three constituent colours. If grey scale image data has been generated for more than three frequencies, it is possible to select sets of three frequencies from those available to produce respective sets of composite image data.

Image resolution is also frequency-dependent as it drops as wavelength increases. Using an embodiment of the invention, a composite image can be built which includes contributions from data which offer:

- a degree of resolution and no sky glint but little penetration
- penetration but with sky glint and low resolution

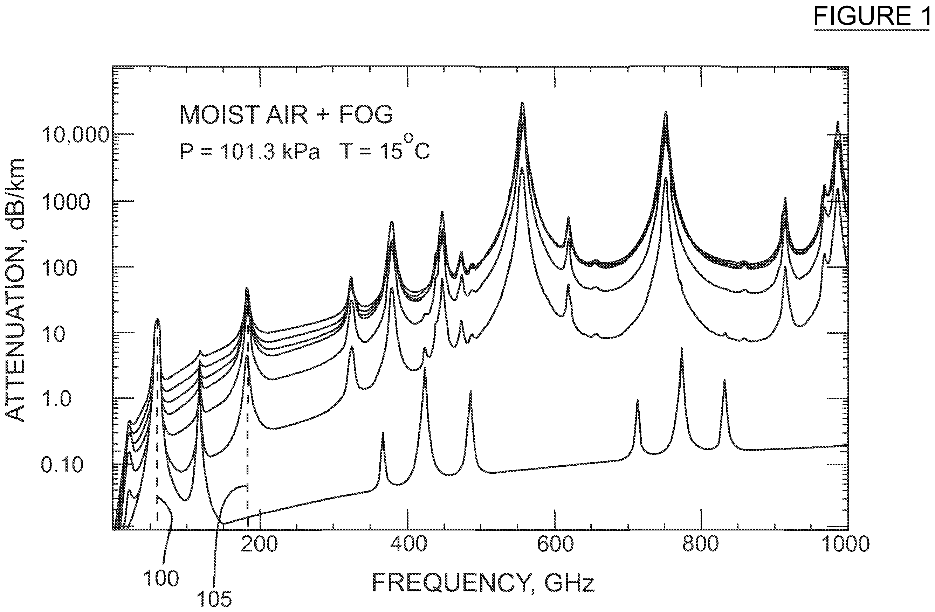

Another variable relevant to embodiments of the invention is the amount of moisture in the atmosphere which attenuates radiation at GHz frequencies and can thus affect the quality of sky glint. Referring to Figure 1, atmospheric attenuation has a complicated relationship with frequency and is difficult to normalise out. There are however at least two frequencies, known as the oxygen line 100 and the water line 205, at which the moisture in the atmosphere has reduced or no effect. It is useful in embodiments of the invention that image data is generated at or close to at least one these frequencies (60GHz and 183GHz) because they offer a reference point from which the level of moisture present in the atmosphere during detection, and therefore the degree of attenuation occurring, can be assessed. "Close to" in this context means within about 7% or 5%.

If the terahertz radiation is received from the field of view by use of receiving apparatus based on a mixer, it is an advantage that the two or more significantly different frequencies are capable of being received by use of a minimum number of local oscillators. To this end, at least two of the significantly different frequencies might be harmonically related so that they can be received via a shared local oscillator. Alternatively, because the output of one receiver using a single local oscillator has a certain bandwidth, where a frequency divider is being used as mentioned above then the two or more significantly different frequencies can be produced from that bandwidth. Again, a single local oscillator is being used to produce the two or more significantly different frequencies.

Although only two frequencies might be used in embodiments of the invention, combinations of three, four or more frequencies might be used to provide a set of different types of image information. For example, these might be a combination of 125, 250, 350 and 500GHz. These frequencies can be expected to operate across a good range of environmental conditions, distinguish skin from non-skin, reduce the incidence of false alarms due to sky glint and still achieve good penetration and resolution to give good detection of concealed objects. However, not all of these can be received in a system using a common local oscillator.

Another reasonable set of frequencies to choose is 60, 120, 240, 360 and 480GHz. This set benefits from the oxygen line as discussed above and additionally all can be received using a common local oscillator of 30GHz using a combination of frequency doublers and/or triplers and sub-harmonic mixers of the second and third order.

According to a second aspect of the invention, there is provided a method of providing image data with respect to a field of view, the method comprising the steps of:

i) receiving terahertz radiation from the field of view at two or more significantly different frequencies simultaneously using at least two terahertz receivers, each receiver comprising a respective mixer that makes use of a common local oscillator source;

ii) generating image data from the received terahertz radiation with respect to a common area of the field of view at each of the frequencies;

iii) providing combined image data for the common area which comprises a combination of the image data generated at step ii); and

characterised in that the respective mixers down-convert the different respective at mixer frequencies that are harmonically related to the frequency of the common local oscillator source.

Further features of embodiments of the invention are as set out in the claims appended hereto.

Apparatus according to the first aspect of the invention might be provided or adapted to offer any one or more of the features discussed herein in relation to the second aspect of the invention. Furthermore, any feature described in relation to any one aspect or to any one embodiment of the invention may be used alone, or in combination with other features described, in relation to the same or one or more other aspects or embodiments of the invention if appropriate.

A terahertz imaging system will now be described as an embodiment of the invention, by way of example only, with reference to the accompanying figures in which:

Figure 1 shows a graph of atmospheric attenuation across a terahertz radiation frequency range for a range of different levels of atmospheric moisture;

Figures 2A and 2B each show a series of images obtained at different frequencies and combinations of frequencies of a field of view with two human figures in it, at different ranges from the figures;

Figure 3 shows in schematic outline apparatus for use in obtaining the images of Figures 2 A and 2B;

Figures 4 and 5 show in more detail a detector and signal processors for use in the apparatus shown in Figure 3;

Figure 6 shows the frequency response of an unbalanced sub-harmonic mixer; and

Figure 7 shows a detector and signal processor such as that shown in Figure 4 but in which a single detector is adapted to provide outputs at more than one frequency.

It might be noted that the figures are schematic only and none of them is drawn to scale.

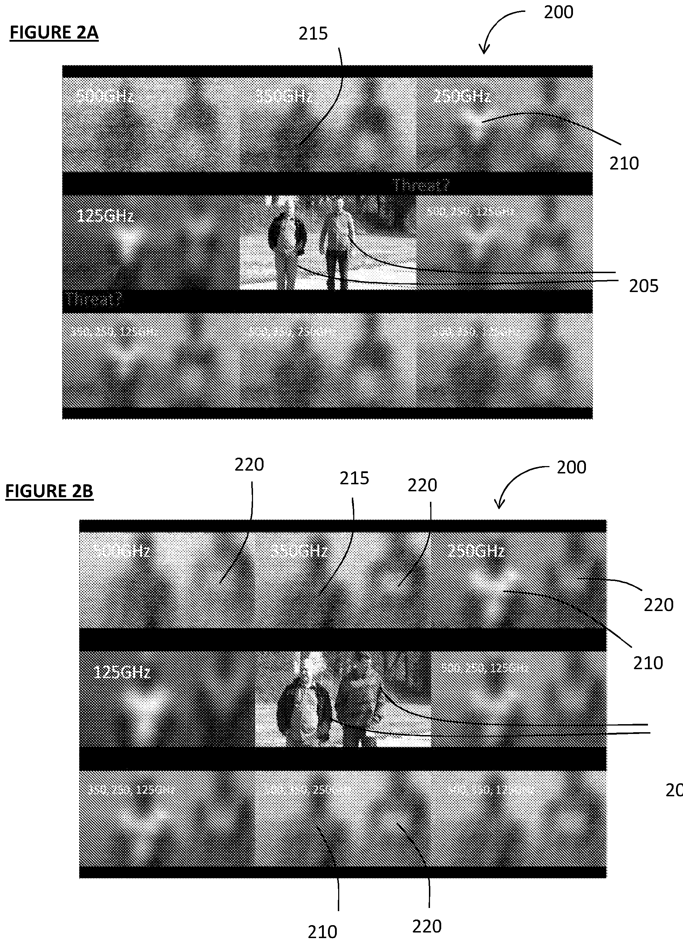

Referring to Figures 2A and 2B, these each show a set of eight terahertz radiation images of a field of view around an optical version of the same field of view. In Figure 2A, the human objects 205 of interest are at a range of 6m while in Figure 2B, they are at 3m. In both sets of terahertz images, the images have been constructed using the following frequency combinations starting at top left and moving in a clockwise direction:

500 GHz,
350 GHz,
250 GHz,
a combination of 500, 250 and 125 GHz,
a combination of 500, 350 and 125 GHz,
a combination of 500, 350 and 250 GHz,
a combination of 350, 250 and 125 GHz,
125 GHz

These images demonstrate two problems associated with sky glint appearing at single frequencies and the solution offered by colour combinations generated from putting together images made at different frequencies with both temporal and spatial synchronicity.

The transition of skin from reflective to emissive can be seen in the images taken at 250 GHz and 350 GHz. At the lower frequency, the skin is showing pronounced sky glint on the left-hand person in the shoulder and thorax area. There is a clear "Y"-shaped cool area 210 of the image. This cool area 210 could conceal an object under clothing that would otherwise be detectable because it is at a lower temperature than skin. However, at the higher frequency of 350 GHz, the cool area appears as a warm area 215 at the same temperature as the rest of the upper part of the left-hand person.

Although it might be thought an option to use only the higher frequency for imaging, in practice the higher frequencies do not penetrate clothing well and a concealed object might remain undetected for that reason.

Only two frequencies are discussed in the above and these show the transition of the skin from reflective to emissive. There could be the same apparent transition for a concealed object because the higher frequency doesn't penetrate clothing as well as lower frequencies. Hence a concealed object just possibly could be seen at 250 GHz and not at 500 GHz if the person is wearing heavy clothing. However, this effect is unlikely to match the characterisation of skin viewed at different frequencies and combinations of frequencies. This is shown in Figure 2B as follows. At 250 GHz, there is a cool area 220 in the shoulder and thorax area of the right-hand person but this could be sky glint just as there appears to be on the left-hand person. At 350 GHZ, the cool area 220 has resolved to a rectangle on the chest of the right-hand person while the sky glint 210 on the left-hand person has disappeared. At 500 GHz, the cool area 220 on the right-hand person has also begun to disappear.

This comparison of images at different temperatures demonstrates the ability to distinguish skin from non-skin, even where there has been thermalisation. The rectangular cool area 220 seen at 350GHz would be visible even where a concealed object has reached body temperature because the transition between emissivity and reflectivity occurs at different frequencies for different materials. In this example, skin has shown a transition to emissivity between 250GHz and 350GHz while the object causing the rectangular cool area 220 shows a transition to emissivity at a temperature higher than 350GHz, thus at a temperature significantly higher than the same transition for skin. The object can be differentiated because the effective temperature of the object at 350GHz is different from that of skin. Such characterisation can be done effectively by using a set of frequencies including frequencies below and above the transition to emissivity for skin and at least one frequency between the transitions for skin and the material of an object of interest.

Although it is possible to compare these series of images at different frequencies and make a judgement as to the nature of apparent cool or warm areas of the image, the colour coding of the images and combination of images made at different frequencies makes a powerful analytic tool because the combined colours can produce new colours and these new colours will be different where the areas have appeared at different combinations of frequencies. The cool area 220 on the right-hand person in Figure 2B appears rectangular in the 500, 350 and 250 GHz images while the sky glint 210 on the skin of the left-hand person appears in only the 250 GHz. Hence the cool area 220 in an image produced using these three frequencies (middle image of the bottom row) firstly remains a light colour and clearly visible anyway, but it will also appear as a distinctive mixture of three different colours, yellow for example. In contrast, the sky glint 210 is barely visible at all in the image produced using these three frequencies and appears as a different, dark colour because at two of the frequencies skin is emissive and warm.

As mentioned above, there may be additional benefits offered by imaging on or around two atmospheric absorption bands, oxygen at 60GHz and water at 183 GHz. Oxygen has the advantage that the imaging will be effectively weather independent and very high levels of clothing (and soil) penetration can be expected at the expense of imaging resolution for a given aperture size. The water line at 183GHz offers glint free operation combined with significantly better penetration than 250GHz which can be borderline for some scenarios.

Atmospheric conditions have a particular influence on passive imaging systems. Referring again to Figure 1, it can be seen that imaging on or close to the oxygen line 100 shows very little or no variation in attenuation due to different levels of atmospheric moisture. This means that a pixel of an image created at the oxygen line frequency will have the same, or substantially the same, intensity regardless of atmospheric conditions. Variation in the intensity of the same pixel created at other frequencies, such as 120 GHz and 250 GHz, will have a component that follows one of the curves shown in Figure 1, according to the level of atmospheric moisture. This information could potentially be used in correcting the apparent intensity levels seen in an image produced at one or more frequencies affected by atmospheric conditions.

Imaging on or close to the water line 105 at 183GHz on the other hand takes reflected sky radiation partially or completely out of an image because the sky radiation has been absorbed by the atmosphere. Although skin is reflective at 183GHz and would therefore normally have areas showing a reduced effective temperature due to sky glint, there is no sky radiation getting through to ground level. Objects which are not at the same effective temperature as their surroundings, such as thick, insulating objects or objects which haven't been in place long enough for thermalisation to have taken place, may provide detectable image data at the water line 105, or at least image data that contributes to a detectable feature in composite image data including data obtained at one or more other frequencies.

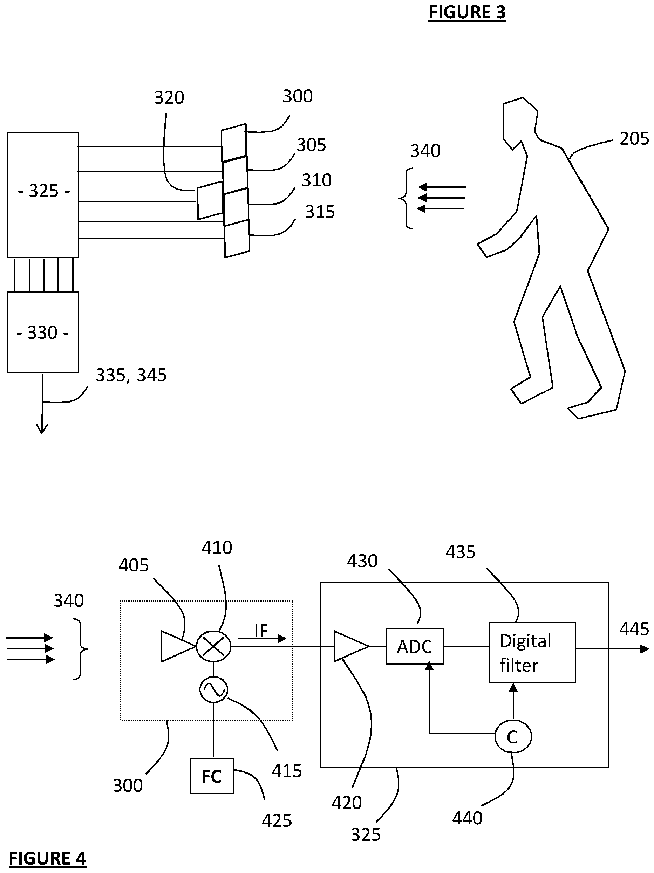

Referring to Figure 3, apparatus for detection of concealed objects as described above might comprise five cameras 300, 305, 310, 315, 320, each camera being sensitive to radiation in a distinctive bandwidth. The cameras are of known type, comprising an array of feedhorns which deliver incoming radiation to a subharmonic mixer for generation of an intermediate frequency (IF) containing image data. The design of the feedhorns along with the corresponding waveguides and detector circuitry determines the bandwidth of the associated camera, in known manner.

The cameras 300, 305, 310, 315, 320 deliver their analogue IF (intermediate frequency) signals to a pre-processor 325 which converts the signals to digital signals and filters them. Thereafter, an image signal generator 330 takes the filtered digital signals from selected sets of the respective cameras, allocates an image colour to each camera in a set and then adds the signals for each pixel of an image signal 335 so that the pixels would be displayed in a colour which is the combination of the colours received at the different frequencies for the selected set of cameras.

One of the cameras 320 is shown out of line in Figure 3 but all the cameras might be in line or they may be otherwise arranged. Some adjustment might be necessary to ensure the data they generate corresponds at least across a common area of interest in a field of view.

Referring to Figure 4, each camera 300, 305, 310, 315, 320 comprises an array of feedhorns 405 (only one shown) delivering incoming radiation 340 via waveguides to a diode-based mixer 410 with an intermediate frequency (IF) output to the pre-processor 325. The feedhorns are scaled in size to give the same coupling factor to the waveguides according to frequency. In the mixer 410, the incoming signal 340 is combined with a reference signal, here provided by a local oscillator (LO) 415 with a frequency control 425. The mixer 410 incorporates a nonlinear element such as a Schottky diode and this combines the radiation 340 with the reference signal to produce sum and difference signals, including an IF. The IF signal is normally low in frequency relative to the terahertz radiation 340 and the reference signal, typically 0.1-40GHz for the IF versus 100-10000GHz for the terahertz radiation 340 and reference signal. Because the IF signal is now low frequency it can be readily filtered, amplified, and rectified if necessary, to produce a voltage that is directly proportional in strength to that of the received terahertz radiation 340 and can subsequently be used to form an image in relation to the field of view.

Using digital synthesis in conjunction with a voltage controlled oscillator, frequency selection in each camera is set in known manner by the local oscillator frequency combined with the effective bandwidth of the mixer and IF amplifier combination. This is one of the powerful aspects of using a heterodyne approach in receiving THz radiation. No complicated or potentially lossy filters are required at RF (radio frequency) frequencies and the frequency of operation can be adjusted instantaneously within the instantaneous bandwidth of the mixer via digital synthesis.

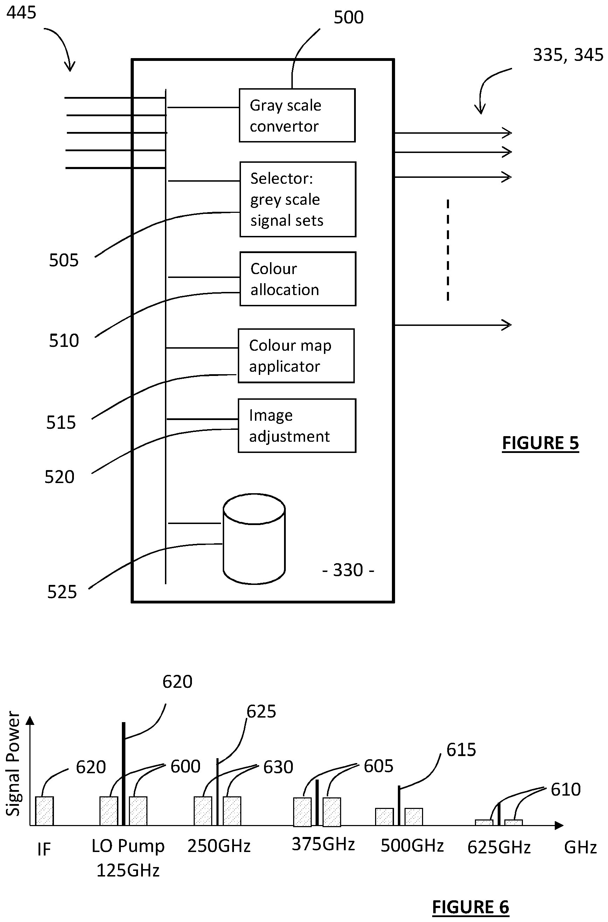

In the signal pre-processor 325, an amplifier 420 coupled with a diode rectifier receives the IF output of the mixer 410, followed by an analogue to digital converter (ADC) 430 where the signal is sampled, and then filtered by a digital filter 435 to give a digital output signal 445 containing image data for a respective frequency of the incoming radiation 340. The ADC 430 and the digital filter 435 are synchronised by a clock 440. Referring to Figure 5, the image signal generator 330 comprises an image processor 500 which receives the digital output signals 445 from the five respective cameras 300, 305, 310, 315, 320. In practice, the image processor 500 provides grey scale conversion and is referred to as a grey scale convertor 500 hereafter. The grey scale convertor converts each of the digital output signals 445 to a grey scale image signal 345 and these can form direct outputs of the image signal generator 330.

The image signal generator 330 also comprises a composite image generator which has several components to it, in this embodiment a selector 505, a colour allocator 510, a colour map applicator 515 and an image adjustment processor 520. As shown in Figures 2A and 2B, the grey scale image signals can be variously combined, by the selector of grey scale image sets 505, into sets of three. To support selection, the cameras might be identified for example by the communication ports by which their respective digital output signals 445 are received at the image signal generator 330 or by identifier (ID) codes carried by the digital output signals 445. For each set of three grey scale image signals, the colour allocator 510 allocates respective constituent colours of a colour map and the colour map applicator 515 delivers a combined image signal 335 in which colour and intensity information from three selected cameras have been combined for respective pixels of an image of the field of view.

In more detail, the output signals 445 from the different cameras are treated separately initially as grey scale according to the level 0-255 whereby the hottest pixel will be set as 255 and the coldest as 0. Therefore for any given pixel there will be a grey scale level for each camera, such as: 25 for the 125GHz camera; 60 for the 250GHz camera; and 250 for the 350GHz camera and so on. As seen in Figures 2A and 2B, the composite images are each formed from a combination of data from three selected cameras so that a known form of Red:Green:Blue colour map can be used to create a composite colour image for those three cameras. In the set quoted above for a given pixel, the grey scale levels are applied to each colour as 25:60:250 and the pixel is then given that colour. This is a known form of colour imaging used for example in Microsoft's PowerPoint application. Taking the colours as red, green and blue and using the numbers 25:60:250 in the PowerPoint colour map, the result is a light blue. (The limitation to three colours is not essential but the use of a known form of colour map is convenient.)

By selecting different combinations of frequencies to be shown, composite images can be created and analysed using any available combination of three of the cameras 300, 305, 310, 315, 320. The analysis can be done visually, where the colours resulting from use of a colour map can be clearly indicative of the presence of concealed objects to the human user, but could equally be automated using shape recognition and/or colour anlaysis. A composite image could be re-processed to produce a further composite image, perhaps outlining a probable concealed object for example.

A strength of embodiments of the invention is the characterisation of skin so that sky glint for example might be recognised and perhaps reduced or removed from a composite image made from grey scale image data at different frequencies. Thus the image signal generator 330 might further comprise the image adjustment processor 520 which compares data from the grey scale image data created at different frequencies in order to adjust the composite images, either directly or by adjusting component grey scale image data.

Adjustment might be for the purpose of standardising data of the grey scale image data with reference to the effect of atmospheric moisture at different THz frequencies. This could be done with reference to the information given by Figure 1 and grey scale image data obtained at the oxygen line 100 (60GHz) which is not susceptible to variation due to atmospheric moisture. Alternatively, adjustment might be for the purpose of removing or reducing areas likely to be showing sky glint. This could be done with reference to the information given by Figure 1 and grey scale image data obtained at the water line 105 (183GHz) where sky glint is not present.

This can be done for instance by taking a grey scale image obtained at or close to 60GHz or 183GHz and using data relating to one or more selected pixels to adjust data relating to the same pixels in a grey scale image obtained at other frequencies. In the case of standardisation using the oxygen line 100, the selected pixel(s) are preferably obtained from a non-reflective reference surface at known temperature. This avoids anomalies arising for example because of the effect of sky glint and penetration changes at different frequencies.

In the absence of grey scale image data at 183GHz, it is still possible to use the image adjustment processor 520 to identify and therefore modify composite image areas likely to be showing skin or the effect of sky glint. As mentioned above, this might be by comparing grey scale image data created above and below a cutoff frequency at which skin makes a transition from emissive to reflective behaviour. In the images shown in Figure 2B, this would be between the grey scale images obtained at 250GHz and 350GHz for example. In this case, the image adjustment processor 520 might compare the grey scale images obtained at 250GHz and 350GHz and, prior to producing a composite colour image for any three of the cameras, adjust grey scale intensity for any cameras likely to be affected by sky glint.

It can be seen that the grey scale image data used by the image adjustment processor 520 are not necessarily those used in creating composite image data using a colour map. Hence composite image data using grey scale data taken at 500GHz, 350GHz and 125GHz could be adjusted to reduce the effect of sky glint on the basis of a comparison of grey scale data obtained at 250GHz and 350GHz. Grey scale image data obtained at 60GHz or 183GHz also does not need to be itself colour mapped and directly present in a composite colour image though still being used to standardise or adjust the grey scale data used in the composite colour image.

Grey scale and composite image data does not have to be output for immediate use but could be stored in an associated database 525. Stored data could be transferred elsewhere for further analysis or output. Also, the database 525 could contain additional reference information, the colour maps and their constituent colours and any other material that could be used for example to adjust or interpret the grey scale image data or composite image data.

Referring to Figure 6, the overall frequency response of a sub-harmonic mixer having an asymmetric (for example, unbalanced or biased) non-linear mixing element shows mixing for incoming radiation at every harmonic of the LO frequency 620. In practice, this is often the situation in a sub-harmonic mixer since it is physically difficult to fabricate exactly balanced diodes for use in an anti-parallel pair. Consequently it is inevitable that there is some parasitic emission of these unwanted harmonic tones due to this imbalance. In addition, a second order harmonic mixer (the received signal is centred around the second harmonic of the local oscillator) is designed to provide optimal sub-harmonic down conversion of the received signal at twice the local oscillator frequency. It will also act as a non-optimised third order frequency multiplier that will emit a harmonic signal at three times the local oscillator signal. If this emitted signal is reflected from either the internal structure of the camera or from the scene back into another mixer that is attempting to receive the passive signal from the scene at this frequency then this parasitic third order emission will likely saturate the extremely weak passive signal. This fundamental problem is avoided in embodiments of the invention by selecting the detected frequencies and optimising the mixers' design so that they all operate from a local oscillator that is derived from a common source. Any higher order parasitic emission falls at exactly the centre of each mixer IF band or zero frequency or DC. It is therefore not detected by the mixer as it falls outside the passband of the mixer at the IF frequency. Because all mixers use the same LO source then if its frequency drifts due to thermal drift etc., then this operating condition will still hold true as all the mixers will track with the LO.

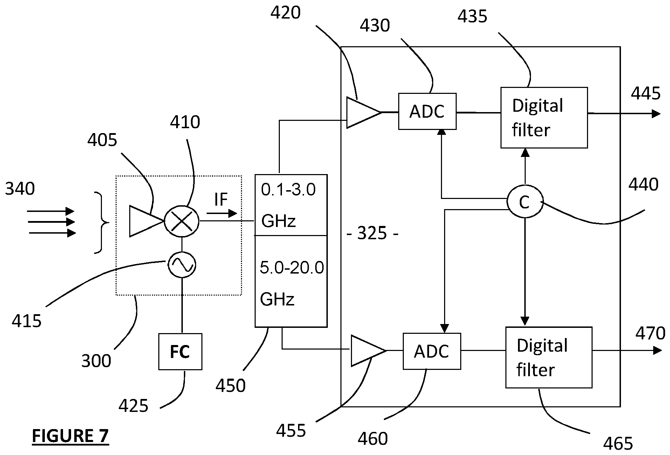

Referring to Figure 7, it is possible to divide the signal received by a single camera by frequency. Particular advantage can be gained here in relation to specific frequencies in the atmospheric attenuation graph of Figure 1, such as an absorption line 100, 105. A single camera can produce image data for instance at the water line frequency, with no or little sky glint, and also at frequencies to either side of the water line 105 where sky glint is present. Using a heterodyne receiver, for example, a diplexer 450 can be used as a frequency divider to split the IF signal into two frequency bands, here shown as a low band at 0.1GHz to 3.0GHz and a high band at 5.0GHz to 20.0GHz, creating two camera outputs 445, 470. The IF band outputs pass through parallel processing channels of the same type as shown in Figure 4: an amplifier 420, 455, analogue to digital converter 430, 460 and a digital filter 435, 465. However, the low band IF channel covers frequencies down-converted from close to or at an absorption line and can therefore provide a channel with little glint. The high band IF channel would cover the frequencies away from the absorption window and so can provide a channel with glint. In this way, one mixer can be used to produce two image data outputs 445, 470, with and without sky glint, importantly from one horn. This minimises the number of horns necessary in the optical focal plane area.

In an example, to provide a 183GHz image data output 445, the LO would be at 91.6GHz and the diplexer 450 would split the IF into a low band 0.1GHz to 3.0GHz channel 420, 430, 435 and a high band 5.0GHz to 20.0GHz channel 455, 460, 465. The low band IF channel would then receive RF over the band 180GHz to 186GHz, which is a water absorption line and produces an image signal output 445 having little sky glint. The high band IF channel would receive RF over the bands 163-178GHz and 188-203GHz which show significantly less atmospheric attenuation and would produce an image signal output 470 having high sky glint.

The same result could be achieved using a microwave switch and two filters instead of the diplexer 450. The switch would alternately switch the IF between a low band filter and a high band filter.

This potential creation of extra channels from one radiation receiver, or camera, is an important advantage of using heterodyne operation in the receiving apparatus. For direct detection using a low noise amplifier at the RF, one might use a diplexer 450 in front of two amplifiers, in which case it would need to operate at the RF frequency. Two amplifiers and detectors are required. Such high frequency diplexers are difficult to make and lossy in nature however.

Whilst 183GHz is described above, channel separation could equally be achieved in relation to other frequencies, representing other molecular absorption lines such as the 60GHz oxygen line. In general terms, the end result can be achieved with a diplexer 450 placed at the RF input signal or at the IF. For mixers it makes sense to do it at the IF as there is very little loss due to the low frequency and only one mixer is required.

## Claims

1. Apparatus for providing image data with respect to a field of view, the apparatus comprising at least two terahertz receivers adapted to receive radiation (340) from a common area of the field of view at different respective frequencies over the same period of time, an image processor (500) for providing image data with respect to the field of view at each respective frequency, and a composite image generator for generating composite image data with respect to the common area from at least part of the image data provided by the image processor (500), the composite image data comprising image data at two or more of said different respective frequencies,
characterised in that each of the two terahertz receivers comprises a respective mixer (410) that makes use of a common local oscillator source (415), and the respective mixers (410) are configured to provide down-conversion of the different respective frequencies at mixer frequencies that are harmonically related to the frequency of the common local oscillator source (415).

2. Apparatus according to any one of the preceding claims, comprising at least two terahertz receivers, these being respectively adapted to receive said radiation (340) in different frequency bands.

3. Apparatus according to any one of the preceding claims wherein the different respective frequencies comprise a set of frequencies selected from a frequency range that spans a transition between reflectivity and emissivity of skin in the common area of the field of view, and/or at least one of the different respective frequencies comprises an atmospheric absorption line (100; 105).

4. Apparatus according to any one of the preceding claims wherein said different respective frequencies comprise at least a first frequency of not more than 150 GHz preferably not more than 100 GHz and a second frequency of not less than 250 GHz, preferably not less than 300 GHz.

5. Apparatus according to any one of the preceding claims wherein the different respective frequencies comprise frequencies at or close to 125, 250, 350 and 500 GHz.

6. Apparatus according to any one of the preceding claims, further comprising a frequency divider for dividing the output of at least one terahertz receiver to provide at least two of said different respective frequencies, and preferably wherein the frequency divider is connected to the IF output of the receiver.

7. Apparatus according to any one of the preceding claims wherein the different respective frequencies comprise a frequency at or close to 60 GHz and/or 183 GHz.

8. Apparatus according to any one of the preceding claims wherein the different respective frequencies comprise frequencies at or close to 60, 120, 240, 360 and 480 GHz.

9. Apparatus according to any one of the preceding claims adapted for passive imaging in relation to the field of view.

10. Apparatus according to any one of the preceding claims, wherein the image processor (500) provides grey scale image data at each of the different respective frequencies in relation to at least the common area of the field of view and the composite image generator is provided with a colour map having constituent colours, the generator being adapted to apply a respective constituent colour to the grey scale image data at respective frequencies in generating composite image data for the common area of the field of view.

11. Apparatus according to any one of the preceding claims, comprising at least two terahertz receivers, each being provided with an image processor (500) for providing image data with respect to the field of view, and the composite image generator, in use, generates the composite image data from the image data provided by at least two of the image processors (500).

12. Apparatus according to any one of the preceding claims wherein the composite image generator comprises an image adjustment processor (520) for adjusting composite image data by reference to image data received from the field of view at one or more of the different respective frequencies, and preferably wherein the composite image data is based on radiation received at a set of different respective frequencies, by reference at least in part to image data received from the field of view at a frequency not in said set.

13. A method of providing image data with respect to a field of view, the method comprising the steps of:

    i) receiving terahertz radiation (340) from the field of view at two or more different frequencies simultaneously using at least two terahertz receivers, each receiver comprising a respective mixer that makes use of a common local oscillator source;
    ii) generating image data from the received terahertz radiation (340) with respect to a common area of the field of view at each of the frequencies;
    iii) providing combined image data for the common area which comprises a combination of the image data generated at step ii);

    and **characterised in that** the respective mixers down-convert the different respective frequencies at mixer frequencies that are harmonically related to the frequency of the common local oscillator source.

14. A method according to Claim 13, further comprising the step of selecting image data from that generated in step ii) at two or more of the frequencies, the combined image data comprising a combination of the selected image data, and preferably further comprising the step of adjusting the combined image data in accordance with image data generated at step ii) for one or more of the frequencies, and preferably wherein the combined image data comprises a combination of the image data generated at step ii) at each of a set of frequencies, and the step of adjusting the combined image data is carried out in accordance with image data generated at step ii) at a further frequency not present in the set.

15. A method according to any one of Claims 13 to 14 wherein the generated image data is grey scale image data and the combined image data is coloured image data derived from assigning constituent colours of a colour map to respective generated grey scale image data, and/or wherein the different frequencies comprise a set of frequencies selected from a frequency range that spans a transition between reflectivity and emissivity of skin in the common area of the field of view.

**Patentansprüche**

1. Vorrichtung zum Bereitstellen von Bilddaten bezügliches eines Sichtfeldes, wobei die Vorrichtung mindestens zwei Terahertz-Empfänger, die ausgebildet sind, um Strahlung (340) von einem gemeinsamen Gebiet des Sichtfeldes bei verschiedenen zugehörigen Frequenzen während der gleichen Zeitspanne zu empfangen, einen Bildprozessor (500) zum Bereitstellen von Bilddaten bezüglich des Sichtfeldes bei jeder zugehörigen Frequenz und einen Gesamtbildgenerator zum Erzeugen von Gesamtbilddaten bezüglich des gemeinsamen Gebietes aus mindestens einem Teil der von dem Bildprozessor (500) bereitgestellten Bilddaten umfasst, wobei die Gesamtbilddaten Bilddaten bei zwei oder mehreren der verschiedenen zugehörigen Frequenzen umfasst, **dadurch gekennzeichnet, dass** jeder der beiden Terahertz-Empfänger einen jeweiligen Mischer (410) aufweist, der von einer gemeinsamen lokalen Oszillator-Quelle (415) Gebrauch macht, und die jeweiligen Mischer (410) ausgebildet sind, eine Herunterkonvertierung der verschiedenen zughörigen Frequenzen bei Mischer-Frequenzen zu liefern, die harmonisch mit der Frequenz der gemeinsamen lokalen Oszillatorquelle (415) verknüpft sind.

2. Vorrichtung nach irgendeinem der vorhergehenden Ansprüche, mit mindestens zwei Terahertz-Empfängern, die jeweils ausgebildet sind, die Strahlung (340) in verschiedenen Frequenzbändern zu empfangen.

3. Vorrichtung nach irgendeinem der vorhergehenden Ansprüche, bei der die verschiedenen zugehörigen Frequenzen eine Gruppe von Frequenzen aufweisen, die aus einem Frequenzbereich ausgewählt sind, der einen Übergang zwischen Reflektivität und Emissivität der Haut in dem gemeinsamen Gebiet des Sichtfeldes überspannt, und/oder mindestens eine der verschiedenen zugehörigen Frequenzen eine atmosphärische Absorptionslinie (100; 105) umfasst.

4. Vorrichtung nach irgendeinem der vorhergehenden Ansprüche, bei der die verschiedenen zugehörigen Frequenzen mindestens eine erste Frequenz von nicht mehr als 150 GHz, vorzugsweise nicht mehr als 100 GHz, und eine zweite Frequenz von nicht weniger als 250 GHz, vorzugsweise nicht weniger als 300 GHz umfassen.

5. Vorrichtung nach irgendeinem der vorhergehenden Ansprüche, bei der die verschiedenen zugehörigen Frequenzen Frequenzen bei oder nahe bei 125, 250, 350 und 500 GHz umfassen.

6. Vorrichtung nach irgendeinem der vorhergehenden Ansprüche, ferner mit einem Frequenzteiler zum Teilen der Ausgabe von mindestens einem Terahertz-Empfänger, um mindestens zwei der verschiedenen zugehörigen Frequenzen bereitzustellen, und wobei der Frequenzteiler vorzugsweise an den IF-Ausgang des Empfängers angeschlossen ist.

7. Vorrichtung nach irgendeinem der vorhergehenden Ansprüche, bei der die verschiedenen zugehörigen Frequenzen eine Frequenz bei oder nahe bei 60 GHz und/oder 183 GHz aufweisen.

8. Vorrichtung nach irgendeinem der vorhergehenden Ansprüche, bei der die verschiedenen zugehörigen Frequenzen Frequenzen bei oder nahe bei 60, 120, 240, 360 und 480 GHz aufweisen.

9. Vorrichtung nach irgendeinem der vorhergehenden Ansprüche, die für passive Bildgebung bezüglich des Sichtfeldes ausgebildet ist.

10. Vorrichtung nach irgendeinem der vorhergehenden Ansprüche, bei der der Bildprozessor (500) Graustufenbilddaten bei jeder der verschiedenen zugehörigen Frequenzen mindestens bezüglich des gemeinsamen Gebiets des Sichtfeldes bereitstellt und der Gesamtbildgenerator mit einer Farbtabelle versehen ist, die einzelne Farben hat, wobei der Generator ausgebildet ist, um eine jeweilige einzelne Farbe auf die Graustufenbilddaten bei jeweiligen Frequenzen beim Erzeugen von Gesamtbilddaten für das gemeinsame Gebiet des Sichtfeldes anzuwenden.

11. Vorrichtung nach irgendeinem der vorhergehenden Ansprüche, mit mindestens zwei Terahertz-Empfängern, von denen jeder mit einem Bildprozessor (520) zum Bereitstellen von Bilddaten bezüglich des Sichtfeldes versehen ist, und der Gesamtbildgenerator im Betrieb die Gesamtbilddaten aus den Bilddaten erzeugt, die von mindestens zwei der Bildprozessoren (500) bereitgestellt werden.

12. Vorrichtung nach irgendeinem der vorhergehenden Ansprüche, bei dem der Gesamtbildgenerator einen Bildeinstellungsprozessor (520) zum Einstellen von Gesamtbilddaten durch Bezugnahme auf Bilddaten aufweist, die von dem Sichtfeld bei einer oder mehreren der verschiedenen zugehörigen Frequenzen empfangen werden, und wobei die Gesamtbilddaten vorzugsweise auf Strahlung basieren, die bei einer Gruppe von verschiedenen zugehörigen Frequenzen durch Bezugnahme zumindest zum Teil auf Bilddaten empfangen werden, die von dem Sichtfeld bei einer Frequenz, die nicht in der Gruppe ist, empfangen werden.

13. Verfahren zum Bereitstellen von Bilddaten bezüglich eines Sichtfeldes, wobei das Verfahren die Schritte aufweist:

   i) Empfangen von Terahertz-Strahlung (340) von dem Sichtfeld bei zwei oder mehr verschiedenen Frequenzen simultan unter Verwendung von mindestens zwei Terahertz-Empfängern, wobei jeder Empfänger einen jeweiligen Mischer aufweist, der von einer gemeinsamen lokalen Oszillator-Quelle Gebrauch macht;
   ii) Erzeugen von Bilddaten, die von der empfangenen Terahertz-Strahlung (340) bezüglich eines gemeinsamen Gebietes des Sichtfeldes bei jeder der Frequenzen empfangen werden;
   iii) Bereitstellen von kombinierten Bilddaten für das gemeinsame Gebiet, das eine Kombination der Bilddaten, die im Schritt ii) erzeugt werden, umfasst;

   und **dadurch gekennzeichnet, dass** die jeweiligen Mischer die verschiedenen zugehörigen Frequenzen bei Mischer-Frequenzen hinunterkonvertieren, die harmonisch mit der Frequenz der gemeinsamen lokalen Oszillator-Quelle verknüpft sind.

**14.** Verfahren nach Anspruch 13, ferner mit dem Schritt des Auswählens von Bilddaten von denjenigen, die im Schritt ii) bei zwei oder mehr Frequenzen erzeugt werden, wobei die kombinierten Bilddaten eine Kombination der ausgewählten Bilddaten umfassen, und vorzugsweise ferner mit dem Schritt des Einstellens der kombinierten Bilddaten im Einklang mit Bilddaten, die im Schritt ii) für eine oder mehrere Frequenzen erzeugt werden, und vorzugsweise wobei die kombinierten Bilddaten eine Kombination von Bilddaten umfassen, die im Schritt ii) bei jeder Frequenz einer Gruppe von Frequenzen erzeugt werden, und der Schritt des Einstellens der kombinierten Bilddaten im Einklang mit Bilddaten ausgeführt wird, die im Schritt ii) bei einer weiteren Frequenz, die nicht in der Gruppe vorhanden ist, erzeugt werden.

**15.** Verfahren nach irgendeinem der Ansprüche 13 bis 14, bei dem die erzeugten Bilddaten Graustufenbilddaten sind und die kombinierten Bilddaten Farbbilddaten sind, die durch Zuordnen von einzelnen Farben einer Farbtabelle zu jeweiligen erzeugten Graustufenbilddaten abgeleitet werden, und/oder bei dem die verschiedenen Frequenzen eine Gruppe von Frequenzen umfassen, die aus einem Frequenzbereich ausgewählt sind, der einen Übergang zwischen Reflektivität und Emissivität der Haut in dem gemeinsamen Gebiet des Sichtfeldes überspannt.

## Revendications

**1.** Appareil pour fournir des données d'image par rapport à un champ de vision, l'appareil comprenant au moins deux récepteurs térahertz adaptés pour recevoir un rayonnement (340) provenant d'une zone commune du champ de vision à différentes fréquences respectives sur la même période de temps, un processeur d'image (500) pour fournir des données d'image par rapport au champ de vision à chaque fréquence respective, et un générateur d'image composite pour générer des données d'image composite par rapport à la zone commune à partir d'au moins une partie des données d'image fournies par le processeur d'image (500), les données d'image composite comprenant des données d'image à deux ou plus de deux desdites différentes fréquences respectives,
**caractérisé en ce que** chacun des deux récepteurs térahertz comprend un mélangeur respectif (410) qui utilise une source d'oscillateur locale commune (415), et les mélangeurs respectifs (410) sont configurés pour fournir une conversion vers le bas des différentes fréquences respectives au niveau de fréquences de mélangeur qui sont harmoniquement liées à la fréquence de la source d'oscillateur locale commune (415).

**2.** Appareil selon l'une quelconque des revendications précédentes, comprenant au moins deux récepteurs térahertz, ceux-ci étant respectivement adaptés pour recevoir ledit rayonnement (340) dans différentes bandes de fréquence.

**3.** Appareil selon l'une quelconque des revendications précédentes, dans lequel les différentes fréquences respectives comprennent un ensemble de fréquences sélectionnées parmi une plage de fréquence qui couvre une transition entre une réflectivité et une émissivité de la peau dans la zone commune du champ de vision, et/ou au moins l'une des différentes fréquences respectives comprend une ligne d'absorption atmosphérique (100 ; 105).

**4.** Appareil selon l'une quelconque des revendications précédentes, dans lequel lesdites différentes fréquences respectives comprennent au moins une première fréquence d'au plus 150 GHz, de préférence d'au plus 100 GHz et une seconde fréquence d'au moins 250 GHz, de préférence d'au moins 300 GHz.

**5.** Appareil selon l'une quelconque des revendications précédentes, dans lequel les différentes fréquences respectives comprennent des fréquences égales ou proches de 125, 250, 350 et 500 GHz.

**6.** Appareil selon l'une quelconque des revendications précédentes, comprenant en outre un diviseur de fréquence pour diviser la sortie d'au moins un récepteur térahertz pour fournir au moins deux desdites différentes fréquences respectives, et de préférence dans lequel le diviseur de fréquence est connecté à la sortie IF du récepteur.

**7.** Appareil selon l'une quelconque des revendications précédentes, dans lequel les différentes fréquences respectives comprennent une fréquence égale ou proche de 60 GHz et/ou 183 GHz.

**8.** Appareil selon l'une quelconque des revendications précédentes, dans lequel les différentes fréquences respectives comprennent des fréquences égales ou proches de 60, 120, 240, 360 et 480 GHz.

**9.** Appareil selon l'une quelconque des revendications précédentes, adapté pour une imagerie passive par rapport au champ de vision.

**10.** Appareil selon l'une quelconque des revendications précédentes, dans lequel le processeur d'image (500) fournit des données d'image de niveaux de gris à chacune des différentes fréquences respectives par rapport au moins à la zone commune du champ de vision et le générateur d'image composite est muni d'une carte de couleurs ayant des couleurs constitutives, le générateur étant adapté pour appliquer une couleur constitutive respective aux données d'image de niveaux de gris à des fréquences respectives pour générer des données d'image composite pour la zone commune du champ de vision.

**11.** Appareil selon l'une quelconque des revendications précédentes, comprenant au moins deux récepteurs térahertz, chacun étant muni d'un processeur d'image (500) pour fournir des données d'image par rapport au champ de vision, et le générateur d'image composite, en utilisation, génère les données d'image composite à partir des données d'image fournies par au moins deux des processeurs d'image (500).

**12.** Appareil selon l'une quelconque des revendications précédentes, dans lequel le générateur d'image composite comprend un processeur d'ajustement d'image (520) pour ajuster des données d'image composite en référence à des données d'image reçues du champ de vision à une ou plusieurs des différentes fréquences respectives, et de préférence dans lequel les données d'image composite sont basées sur un rayonnement reçu à un ensemble de différentes fréquences respectives, en référence au moins en partie à des données d'image reçues du champ de vision à une fréquence ne figurant pas dans ledit ensemble.

**13.** Procédé pour fournir des données d'image par rapport à un champ de vision, le procédé comprenant les étapes consistant à :

i) recevoir un rayonnement térahertz (340) provenant du champ de vision à deux ou plus de deux fréquences différentes simultanément en utilisant au moins deux récepteurs térahertz, chaque récepteur comprenant un mélangeur respectif qui utilise une source d'oscillateur locale commune ;
ii) générer des données d'image à partir du rayonnement térahertz reçu (340) par rapport à une zone commune du champ de vision à chacune des fréquences ;
iii) fournir des données d'image combinées pour la zone commune qui comprennent une combinaison des données d'image générées à l'étape ii) ;

et **caractérisé en ce que** les mélangeurs respectifs convertissent vers le bas les différentes fréquences respectives au niveau de fréquences de mélangeur qui sont liées harmoniquement à la fréquence de la source d'oscillateur locale commune.

**14.** Procédé selon la revendication 13, comprenant en outre l'étape consistant à sélectionner des données d'image à partir de celles générées à l'étape ii) à deux ou plus de deux fréquences, les données d'image combinées comprenant une combinaison des données d'image sélectionnées, et comprenant de préférence en outre l'étape consistant à ajuster les données d'image combinées conformément à des données d'image générées à l'étape ii) pour une ou plusieurs des fréquences, et de préférence dans lequel les données d'image combinées comprennent une combinaison des données d'image générées à l'étape ii) à chacune d'un ensemble de fréquences, et l'étape d'ajustement des données d'image combinées est effectuée conformément à des données d'image générées à l'étape ii) à une autre fréquence ne figurant pas dans l'ensemble.

**15.** Procédé selon l'une quelconque des revendications 13 à 14, dans lequel les données d'image générées sont des données d'image de niveaux de gris et les données d'image combinées sont des données d'image colorées dérivées de l'attribution de couleurs constitutives d'une carte de couleurs à des données d'image de niveaux de gris générées respectives, et/ou dans lequel les différentes fréquences comprennent un ensemble de fréquences choisies parmi une plage de fréquence qui couvre une transition entre une réflectivité et une émissivité de la peau dans la zone commune du champ de vision.

FIGURE 1

**FIGURE 2A**

**FIGURE 2B**

**FIGURE 3**

**FIGURE 4**

445

500

335, 345

| | Gray scale convertor |
| 505 | Selector: grey scale signal sets |
| 510 | Colour allocation |
| 515 | Colour map applicator |
| 520 | Image adjustment |
| 525 | |

- 330 -

**FIGURE 5**

620

625

Signal Power

620

600

615

630

605

610

IF

LO Pump
125GHz

250GHz

375GHz

500GHz

625GHz

GHz

**FIGURE 6**

**FIGURE 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   US 20080251733 A

**Non-patent literature cited in the description**

•   **ROGER APPLEBY ; H BRUCE WALLACE.** Stand-off Detection of Weapons and Contraband in the 100 GHz to 1 THz Region. *IEEE Transactions on Antennas and Propagation,* November 2007, vol. 55 (11), 2944-2956